(19) **Europäisches Patentamt**
**European Patent Office**
**Office européen des brevets**

(11) **EP 1 652 400 B1**

(12) **EUROPEAN PATENT SPECIFICATION**

(45) Date of publication and mention
of the grant of the patent:
**18.07.2012 Bulletin 2012/29**

(51) Int Cl.:
*H04W 16/02* (2009.01)     *H04W 16/12* (2009.01)

(21) Application number: **04741712.6**

(22) Date of filing: **02.06.2004**

(86) International application number:
**PCT/EP2004/050999**

(87) International publication number:
**WO 2005/015937 (17.02.2005 Gazette 2005/07)**

(54) **FREQUENCY RE-USE PLANNING BASED ON INTERFERENCE AND QUALITY OF SERVICE IN A WIRELESS COMMUNICATION SYSTEM**

FREQUENZWIEDERVERWENDUNGS-PLANUNG GEMÄSS SIGNALSTÖRUNG UND DIENSTQUALITÄT (QoS) IN EINEM DRAHTLOSEN KOMMUNIKATIONSSYSTEM

PLANIFICATION DE REUTILISATION DES FREQUENCES EN FONCTION DE L'INTERFERENCE ET DE LA QUALITE DE SERVICE DANS UN SYSTEME DE COMMUNICATION SANS FIL

(84) Designated Contracting States:
**AT BE BG CH CY CZ DE DK EE ES FI FR GB GR HU IE IT LI LU MC NL PL PT RO SE SI SK TR**

(30) Priority: **23.07.2003 GB 0317150**

(43) Date of publication of application:
**03.05.2006 Bulletin 2006/18**

(73) Proprietor: **Motorola Mobility, Inc.**
**Libertyville, IL 60048 (US)**

(72) Inventors:
• **WILLIAMS, Olatunde**
**Swindon, Wiltshire SN1 4NP (GB)**
• **BRUSCH, Simon**
**Faringdon, Oxfordshire SN7 7UT (GB)**
• **RATFORD, Michael**
**Swindon SN1 2NT (GB)**

(74) Representative: **Jepsen, René Pihl**
**Eltima Consulting**
**Grove House, Lutyens Close'**
**Chineham Court**
**Basingstoke, Hants RG24 8AG (GB)**

(56) References cited:
**GB-A- 2 356 320     GB-A- 2 382 503**

• **VELEZ F J ET AL: "FREQUENCY REUSE AND SYSTEM CAPACITY IN MOBILE BRAODBAND SYSTEMS: COMPARISON BETWEEN THE 40 AND 60 GHZ BANDS" WIRELESS PERSONAL COMMUNICATIONS, KLUWER ACADEMIC PUBLISHERS, NL, vol. 19, no. 1, October 2001 (2001-10), pages 1-24, XP001081074 ISSN: 0929-6212**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

This invention relates to frequency re-use planning in a wireless communication system. The invention is applicable to, but not limited to, use of multiple 'S' curves for frequency planning in a multiple technology wireless cell-based communication environment.

**Background of the Invention**

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs).

In a wireless communication system, each BTS has associated with it a particular geographical coverage area (or cell). Primarily, a transmitter power level of a BTS defines a coverage area where a BTS can maintain acceptable communications with MSs operating within its serving cell. In addition, receiver sensitivity performance of receiving wireless communication units also affects the extent of a given coverage area. In large cellular communication systems, these cells are combined and often overlapped to produce an extensive, wide coverage area.

Wireless communication systems are distinguished over fixed communication systems, such as the public switched telephone network (PSTN), principally in that subscriber units/mobile stations move between coverage areas, where communications in the different coverage areas are served by different BTS (and/or different service providers). In doing so, the MSs encounter varying radio propagation environments.

In a cellular system, adjacent cells are typically configured to overlap, to ensure a contiguous signal coverage area, whilst the MSs move between cells. The cell overlap region is deliberately designed into the system plan to ensure that MSs can successfully handover between communication cells. The frequencies used in particular cells are generally selected to minimise a level of radio interference generated on adjacent cells.

A system design based on cells is typically based on an ideal cell pattern. However, an idealised cell pattern never occurs in practice, due to the nature of the terrain and the fact that cell sites and antennae are not ideally located on a regular grid pattern. The wireless system designer therefore uses frequency-planning tools to estimate the radio propagation for each cell and predict a corresponding coverage area. Based on these propagation models, the system designer is able to develop a frequency plan for the system intended to minimise the expected interference.

Examples of approaches for frequency planning are given in British Patent Application publications GB 2 382 503 and GB 2 356 320. GB 2 382 503 describes the generation of a frequency re-use plan for a wireless infrastructure that predicts interference based upon signal levels. GB 2 356 320 describes penalty tables generated from a singular relationship of received signal levels.

Frequency planning is arguably the most challenging and time consuming task in designing a mobile communication system. Effective usage of the frequency spectrum, one of the scarcest resources for any operator, leads to both better system quality and increased capacity. In this regard, the frequency plan considers such factors as antenna heights and location, terrain topology, transmitted power levels and the anticipated number of subscriber units.

In the context of frequency planning, recent developments in simulation tools have provided the opportunity to 'automatically' perform a frequency re-planning (AFP) operation, based on analysis of measured data and system parameters such as transmit power, subscriber receiver sensitivity, etc. Automating a frequency planning process typically produces better quality frequency plans and yields a multitude of benefits, such as:

  (i) A better quality of service may be achieved in systems with minimal opportunity for frequency reuse, particularly in systems with tight frequency reuse;

  (ii) A major capital expenditure in infrastructure may be deferred, as the current system is able to handle more traffic at a given quality of service; and

  (iii) The time for frequency planning is reduced - enabling system designers enough time to concentrate on other, more complex enhancements to system quality.

For systems supporting AFP applications, there is a requirement on active subscriber units to scan as many frequencies as possible to aid frequency planning. This information, in the form of measurement reports, is fed into an AFP application that is able to determine an optimal frequency plan for the communication system.

A number of techniques exist for allocating frequencies to cells in a radio system within a frequency planning operation. Typically, these techniques are based on maximising the Carrier to Interference ratio (C/I) for those 'pixels' included in the 'analysis space' of a frequency planning tool. The major weakness of these techniques is that they assume a uniform distribution of subscriber units in a cell. As such the known techniques do not accurately reflect the actual distribution of C/I that can be encountered in a cell. A further weakness of these techniques is that the non-uniform distribution of communication traffic, where the traffic may include speech, data, signalling, video, etc., such that each of which has different minimum interference requirements, is not captured in the frequency planning algorithm.

Furthermore, with the advent of packet switched and adaptive multi-rate technologies, frequency planning based on a single criterion is no longer an optimal solution. Typically, frequency planning tools seek to exceed a minimum C/I in all radio cells. However, radio carriers will now need to support traffic with heterogeneous minimum C/I requirements.

The generation of a frequency re-use plan for a wireless infrastructure described in British Patent Application publications GB 2 382 503 is based on measurement reports (i.e. signal levels) for predicting C/I characteristics. However, GB 2 382 503 does not use actual interference measurements, but only predicts them based upon signal levels. This results in a frequency re-use which is less accurate than ideally preferred. Moreover, GB 2 382 503 considers only a single communication types which may also result in less than optimal frequency plans for more complex communication system.

Similar to GB 2 382 503, the system of GB 2 356 320 also uses penalty tables generated from signal level measurements and furthermore only uses a penalty table that is generated based upon a singular relationship of received signal levels. This results in a frequency re-use which is less accurate than ideally preferred and in less than optimal frequency plans for more complex communication system.

Thus, there exists a need in the field of the present invention to provide a wireless communication system, a communication unit and method for frequency re-planning; wherein the aforementioned disadvantages may be alleviated.

**Statement of Invention**

In accordance with a first aspect of the present invention there is provided a wireless communication system, as claimed in Claim 1.

In accordance with a second aspect of the present invention, there is provided a method of frequency re-planning in a wireless communication system, as claimed in Claim 8.

In accordance with a third aspect of the present invention, there is provided a computer program product, as claimed in Claim 11.

In accordance with a fourth aspect of the present invention, there is provided a communication unit, as claimed in Claim 12.

In summary, the inventive concepts of the present invention propose a wireless communication system (100), a method of frequency planning and a communication unit to generate a frequency plan based on a relationship between an interference measurement and a quality of service value for a plurality of communication types.

The interference measurement is a measured server cell-to-neighbour cell received signal strength indicator difference and the quality of service value may comprise a frame erasure rate (FER) value. The preferred embodiment generates and uses multiple 'S' curves, where each curve describes a relationship between, say, C/I and frame erasure rate (FER) for a given technology and/or traffic class (and possibly context) under specific radio conditions. Thus, each 'S' curve is defined for specific technologies and/or traffic types (and possibly contexts).

Once multiple 'S' curves have been generated, they are applied to a frequency-planning tool. Multiple 'S' curves can then be assessed against each other, for example in the context of a penalty matrix, to identify a specific interference relationship, for example, between a frequency carrier supporting a first communication technology and/or traffic type (and possibly context) on a first cell and a frequency carrier supporting a second communication technology and/or traffic type (and possibly context) on a second cell.

An overall 'penalty' value is calculated for one or more radio interference scenarios, i.e. a value representing the effect of applying a specific frequency assignment to a cell with specific interference relationships to a set of neighbouring cells. In this manner, frequency planning is facilitated for a non-uniform allocation of penalty values on different radio carriers, for example within the same radio cell. This allows different re-use distances to be achieved for different radio carriers. In so doing, it is now possible to plan for a different quality of service on respective, individual radio carriers.

By systematically applying a number of 'S' curves to identify an interference relationship, a carrier-to-carrier penalty matrix can also be derived. In this regard, the frequency planning tool is then able to use the derived penalty matrix to analyse the impact of, and interference interrelationship between, different communication technologies being applied to different cells or BTSs within the cells. This, in turn, enables the frequency planning tool to generate an improved frequency plan for a cellular radio system, particularly one supporting multiple technologies and/or traffic types.

**Brief Description of the Drawings**

Exemplary embodiments of the present invention will now be described, with reference to the accompanying drawings, in which:

FIG. 1 illustrates a block diagram of a cellular radio communications system adapted to support the various inventive concepts of a preferred embodiment of the present invention;

FIG. 2 illustrates a graph of a typical 'S'-curve;

FIG. 3 illustrates a penalty table in accordance with the preferred embodiment of the present invention; and

FIG. 4 illustrates a flowchart of a frequency re-planning process using multiple 'S'-curves, in accordance with a preferred embodiment of the present invention.

**Description of Preferred Embodiments**

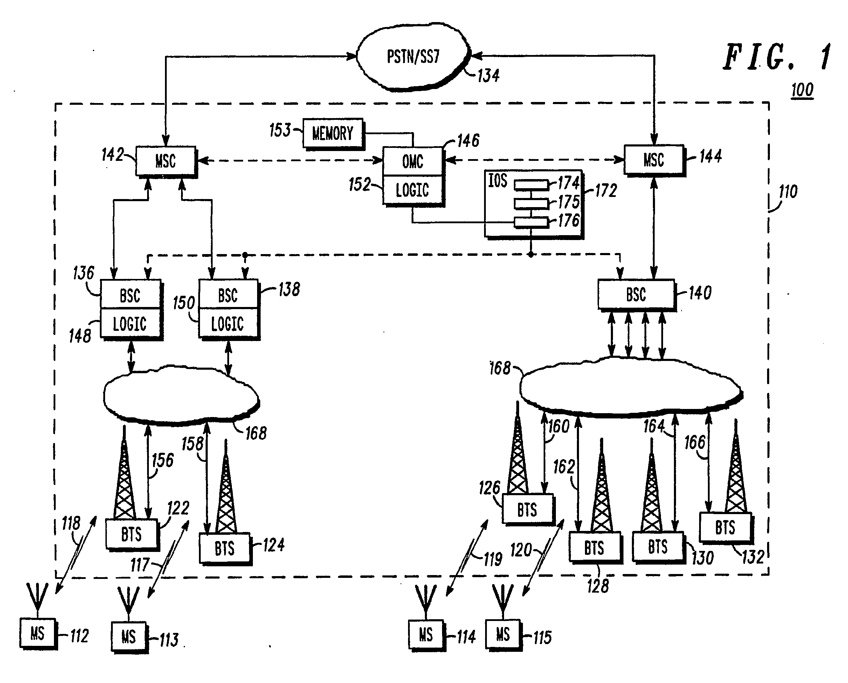

Referring first to FIG. 1, a multi-layer cellular telephone communication system 100 is shown, in outline, supporting a Global System for Mobile communication (GSM) air-interface, in accordance with a preferred embodiment of the invention. The European Telecommunications Standards Institute (ETSI) has defined the GSM air-interface. The multi-layer cellular system is shown in a simplified form, with a limited number of system elements shown for clarity purposes only.

Generally, the air-interface protocol is administered from base transceiver sites, within the system architecture 110, that are geographically spaced apart - one base site supporting a cell (or, for example, sectors of a cell).

A plurality of subscriber units 112-115 is shown as communicating over the selected air-interface 117-120 with a plurality of base transceiver stations (BTS) 122-132. A limited number of MSs 112-115 and BTSs 122-132 are shown for clarity purposes only. The BTSs 122-132 may be connected to a conventional public-switched telephone network (PSTN) 134 through base site controllers (BSCs) 136-140 and mobile switching centres (MSCs) 142-144. Each BTS 122-132 is principally designed to serve its primary cell, with each BTS 122-132 containing one or more transceiver units to communicate 156-166 with the rest of the cellular system infrastructure

Each BSC 136-140 may control one or more BTSs 122-132, with BSCs 136-140 generally interconnected through MSCs 142-144. Processes within the MSCs are provided to account for the situation where a MS (112-115) passes between two BTS serving areas, for example MS 112 moving from an area covered by BTS 122 to an area covered by BTS 124, where the two BTSs are controlled by different BSCs (BSC 136 and BSC 138 in this example).

Each MSC 142-144 provides a gateway to the PSTN 134, with MSCs 142-144 interconnected through an operations and management centre (OMC) 146 that administers general control of the cellular telephone communication system 100, as will be understood by those skilled in the art.

The various system elements, such as BSCs 136-138 and OMC 146, include control logic 148, 150, 152, with the various system elements usually having an associated memory function 154 (shown only in relation to BSC 138 for the sake of clarity). A memory function 153 of the OMC 146 typically stores historically compiled operational data, as well as in-call data, control algorithms and system information such as neighbouring cell-site lists, for example a list of frequencies to be scanned by the respective MSs. In operation, an initial frequency re-use plan is set by an intelligent optimisation system (IOS) 172 and notified to the OMC 146. The OMC 146 commands the BTSs 122-132 via their BSCs 136-140 to set their operating frequencies accordingly.

In accordance with the preferred embodiment of the present invention, an intelligent optimisation system (IOS) 172 is operably coupled to the OMC 146 and the base station controllers 136-140. Notably, the IOS 172 comprises an 'S' curve processing/analysing function 175, which is configured to process/analyse a number of 'S' curves relating to particular technologies and/or traffic types (and possibly contexts) and identify an interference relationship between the technologies and/or traffic types (and possibly contexts) employed in neighbouring cells. The processing of multiple 'S' curves enables the OS 172 to generate an improved frequency re-use plan in accordance with the preferred embodiment of the present invention.

In alternative embodiments, it is envisaged that the 'S' curve processing/analysing function 175 may be located within the OMC 146. Indeed, it is envisaged that in alternative embodiments, the 'S' curve processing/analysing function 175 may be operably coupled to other functions within the wireless communication system, or even distributed across a number of elements, if appropriate.

The 'S' curve processing/analysing function 175 is configured to receive C/I information and related quality of service metrics, such as frame error rate (FER) information for each communication cell supported by the OMC 146. In the preferred embodiment of the present invention, this 'S' curve information is pre-generated by, say, an Operator, and loaded into the 'S' curve processing/analysing function 175.

It is envisaged that the 'S' curve data can be automatically generated in a real-time manner based on received measurement reports (MRs), generated by BTSs or MSs operational within particular cells. Notably, the information received in this scenario, in order to classify the 'S' curve data, also preferably indicates real-time traffic types, technologies used within the cell, system parameters, etc.

In this regard, the 'S' curve processing/analysing function 175 within the IOS 172 is operably coupled to a collection function 176, which is operably coupled to the BSCs 136-140 for collating cell information. The 'S' curve processing/analysing function 175 then analyses the interference relationship between multiple 'S' curves, when considered in the context of configuring corresponding cells as neighbouring cells in a wireless communication system.

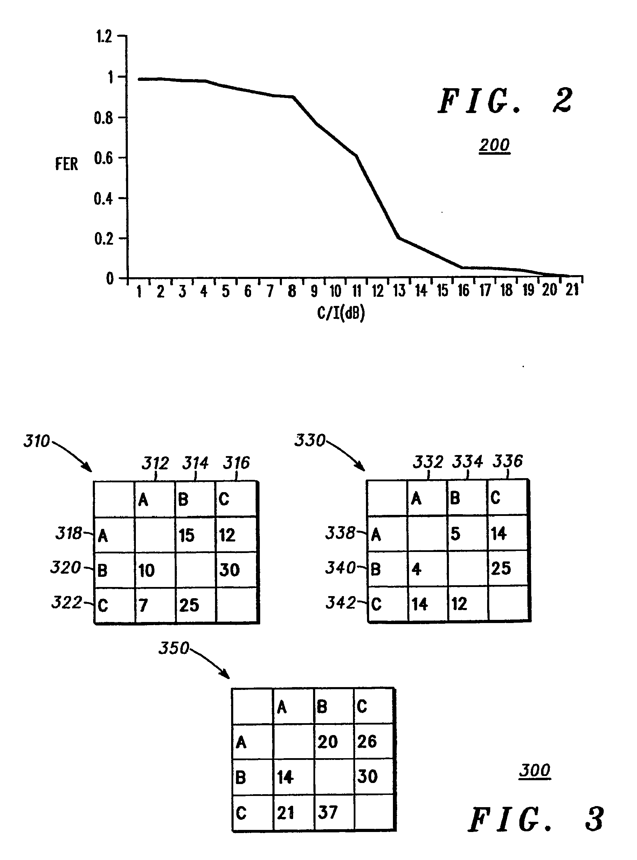

Eache 'S' curve describes a relationship between one or more interference metrics, such as C/I, and one or more quality of service (QoS) metrics such as frame erasure rate (FER) for, say, a traffic class under specific radio conditions. Thus, eache 'S' curve is defined for specific traffic types and contexts. In this regard, the 'S' curve processing/analysing function 175 generates an interference penalty matrix for each technology and/or traffic type (and possibly context). The 'S' curve processing/analysing function 175 then analyses a number of these matrices, in the context of neighbouring cells, to identify an overall interference penalty value. These aggregated values are preferably generated by combining matrices, for example in the manner as illustrated in FIG. 3. Once an overall penalty value has been generated, it is applied to a frequency-planning tool 174, within the IOS 172.

Thus, multiple 'S' curves can then be assessed against each other, for example in the context of a penalty matrix, to determine an anticipated interference relationship. Preferably, one example could be a relationship between a frequency carrier supporting a first communication technology and/or traffic type (and possibly context) on a first cell and a frequency carrier supporting a second communication technology and/or traffic type (and possibly context) on a second cell.

More generally, the 'S' curve processing/analysing function 175 may be programmed into, say, the IOS 172 in any suitable manner. For example, new apparatus may be added to a conventional IOS 172 (or OMC 146) communication unit. Alternatively existing parts of a conventional IOS 172 (or OMC 146) communication unit may be adapted, for example, by reprogramming one or more processors therein. As such the required adaptation may be implemented in the form of processor-implementable instructions stored on a storage medium, such as a floppy disk, hard disk, programmable read only memory (PROM), random access memory (RAM) or any combination of these or other storage media.

Thus, a skilled artisan will appreciate that the configuration 100 shown in FIG. 1 is merely a representative preferred example of an architecture that is able to benefit from the inventive concepts described herein.

Referring now to FIG. 2, a typical 'S' curve 200 is illustrated. The S-Curve 200 illustrated in FIG. 2 indicates the C/I ratio versus FER for a GSM full rate speech signal relating to a radio environment characterised by a TU3 fading profile with no frequency hopping. The 'S' curve processing/analysing function 175 of FIG. 1 preferably contains (receives and/or generates) a number of 'S' curves in the manner shown in FIG. 2, for the various technologies and/or traffic types (and possibly contexts).

When applying the inventive concepts to frequency planning for a radio system, it is envisaged that different S-curves may be generated for different radio cells and radio carriers within those cells, depending on contextual parameters. For example in a GSM radio system, contextual parameters might include the level of discontinuous transmission in a neighbouring cell. In the case of frequency planning for a radio network employing frequency-hopping algorithms, contextual parameters might include the number of frequencies being hopped over and the probability of frequency clashes. Other contextual parameters may include, for example, a Rayleigh fading profile in the radio cell. A skilled artisan would appreciate that many other contextual parameters could be used within the 'S' curve concept.

In order to consider the interference relationship of the two (or more) neighbouring wireless communication cells, where each cell may support different technologies and/or traffic types (and possibly contexts), a number of penalty matrices are generated by the 'S' curve processing/analysing function 175. The matrices are based on the corresponding 'S' curve, such as the 'S' curve illustrated in FIG. 2.

Referring now to FIG. 3, two penalty matrices 310, 330 and an aggregate penalty matrix 350 are shown. The concept of a penalty matrix having a number of penalty values is described in the published co-pending patent application - GB 2382503 A - having the same Applicant as the present invention. As illustrated in FIG. 3, each penalty matrix 310, 330 indicates the relative impact, defined as a penalty value (or performance metric) relating to the radio interference between respective pairs of cells 'A' to 'C' when they employ the same frequencies. Each of the penalty values relates to a particular 'S' curve for a given technology and/or traffic type (and possibly context).

In each penalty matrix, cells 'A', 'B' and 'C' are illustrated as columns 312, 314, 316 and rows 318, 320, 322 for a first technology and/or traffic type and/or context. Notably, the penalty matrix is generated for each technology and/or traffic type (and possibly) context based on 'S' curve data. For example, let us assume a technology-based scenario where a first penalty matrix 310 is generated for GSM voice communication and a second penalty matrix 330 is generated for packet data communication in a general packet radio system (GPRS).

Let us first consider the first penalty matrix 310. The 'S' curve processing/analysing function 175 (of FIG. 1) is able to determine, for a given technology and/or traffic type (and possibly context), the relative impact on cell 'A', assuming that cell 'C' is allocated the same channel frequency as cell 'A'. In FIG.3, this interference impact (penalty) value is '12'.

In this case, the penalty value may indicate that 12% of measurement reports received from cell 'A' would have a received signal strength lower than the neighbouring cell 'C' by some value, say 'x' dBs.

The 'S' curve processing/analysing function 175 generates a penalty matrix for each technology and/or traffic type (and possibly context). Let us then consider the second penalty matrix 330, as illustrated in FIG. 3. Cells 'A', 'B' and 'C' are illustrated as columns 332, 334, 336 and rows 338, 340, 342 for the second technology, which is GPRS. Notably, in accordance with the preferred embodiment of the present invention, the penalty matrix is generated for GPRS technology based on corresponding GPRS 'S' curve data.

In accordance with the preferred embodiment of the present invention, the two penalty matrices are combined, for example using a summation approach (although it is envisaged that other aggregate techniques could be used) to produce an aggregate penalty matrix 350 for the scenario where the two technologies are used in neighbouring cells. Thus, the aggregate penalty matrix 350 is the matrix that is used to optimise the frequency plan within the frequency planning tool 174.

In summary, the 'S' curve processing/analysing function 175 is able to utilise a number of 'S' curves for a particular technology and/or traffic type (and possibly context) to identify and generate a penalty matrix for that technology and/or traffic type (and possibly context), where each 'S' curve produces a penalty value. A number, preferably two, of penalty matrices can then be combined to produce an aggregate penalty matrix 350. Advantageously, the aggregate penalty matrix 350 can be generated from dissimilar technologies and/or traffic types (and possibly contexts). The 'S' curve processing/analysing function 175 is then able to calculate an overall 'penalty' value, i.e. a value representing the interference effect of applying a specific frequency assignment to a cell having specific interference relationships, to a set of neighbouring cells.

Thus, by systematically applying the multiple 'S' curve concept to an interference relationship, irrespective of the interfering technologies, a carrier-to-carrier, aggregate penalty matrix 350 can be derived by the 'S' curve processing/analysing function 175. In this regard, the frequency planning tool 174 is then able to use the multiple derived penalty matrices for each technology or traffic type (and possibly context) to minimise the impact of, and interference interrelationship between, different communication technologies being applied to different cells or BTS 122-132 within the cells. This, in turn, enables the frequency planning tool 174 to generate an improved frequency plan for a cellular radio system.

By using multiple 'S' curves in this manner, it is therefore possible to capture the effect of interference on a specific traffic type, such as voice, data short message services (SMS), video, etc., across multiple technologies, for example, cells supporting general packet radio system (GPRS) communications, adaptive multi-rate codec (AMR) communications, EDGE communications, GSM full rate speech communications, etc.

In order to illustrate the benefits provided by the aforementioned inventive concepts, let us consider a few practical examples.

**Example 1:**

At a specific C/I, the probability of an erased frame is different for the different technologies and/or traffic types (and possibly contexts). Let us therefore consider a radio carrier cell with 100% traffic occupancy of which 50% is contributed by Adaptive Multi-rate (AMR) Enhanced Full Rate (EFR) speech and 50% by standard GSM full rate speech. In the case of the GSM full rate speech communication, a FER of close to 100% might be expected for C/I of <=9 dB. However, in the case of AMR codecs, a higher C/I might be required to achieve this FER performance.

Thus, in order to capture these requirements, different 'S' curves pertaining to the different technologies and/or traffic types (and possibly contexts) are employed in the calculation of respective 'penalty' values and the subsequent generation of the penalty matrices. Thus, penalties are defined for interference relationships between radio carriers. Therefore, when a specific carrier frequency supports traffic from more than one traffic type, a number of 'S' curves are generated for each context.

In this example, if there are eight timeslots available for both types of traffic, then a penalty value can be calculated as follows:

$$\text{Penalty} = 8 \times \left[ \begin{array}{l} \text{Intf\_(AMR)} \times \text{AMR\_Occupancy\_on\_Server} \times \text{Occupancy\_on\_Interferer} \\ + \text{Intf\_(Full\_Rate)} \times \text{Full\_Rate\_Occupancy\_on\_Server} \times \text{Occupancy\_on\_Interferer} \end{array} \right]$$

Where:

x_Occupany_on_Server is a value associated with the occupancy of a particular traffic type on a specific carrier, e.g. AMR (EFR) or full rate speech;

Occupancy_on_interferer is a value associated with the traffic occupancy on the interferer carrier; and

Intf(x) is the mean FER value for a particular speech codec such as the AMR (EFR) or full rate GSM speech.

The penalty calculation is based on the potential interference resulting from a particular frequency assignment and a type of traffic or communication technology such as GPRS, AMR, EDGE, GSM full rate speech, etc (and possibly a context).

**Example 2:**

Again, let us consider a radio carrier with 100% occupancy, of which 50% is contributed by AMR EFR communication and 50% by GSM full rate speech. If there are eight timeslots available for both types of traffic, then a penalty value may be calculated as follows:

$$
\begin{aligned}
\text{Penalty} = 8 * (\text{Intf\_(AMR)} * \text{AMR\_Occupancy\_on\_Server} \\
*\text{Occupancy\_on\_Interferer} + \text{Intf\_full rate speech} * \\
\text{full\_rate\_Occupancy\_on\_Server} * \\
\text{Occupancy\_on\_Interferer})
\end{aligned}
$$

Where the following definitions apply:

Intf_AMR: a mean FER for AMR speech frames, which is based on the potential interference resulting from a particular frequency assignment. (N.b. it is envisaged that this could be calculated by applying the specific AMR 'S' curve to the distribution of server-interferer signal level differences for a given server-interferer relationship.}

Intf_full_rate: a mean FER for full rate speech frames, which is based on the full rate speeche 'S' curve;

AMR_Occupancy_on_Server: the occupancy of AMR traffic on a specific carrier;

full_rate_Occupancy_on_Server: speech traffic occupancy on a server carrier; and

Occupancy_on_Interferer: the traffic occupancy on the interferer carrier.

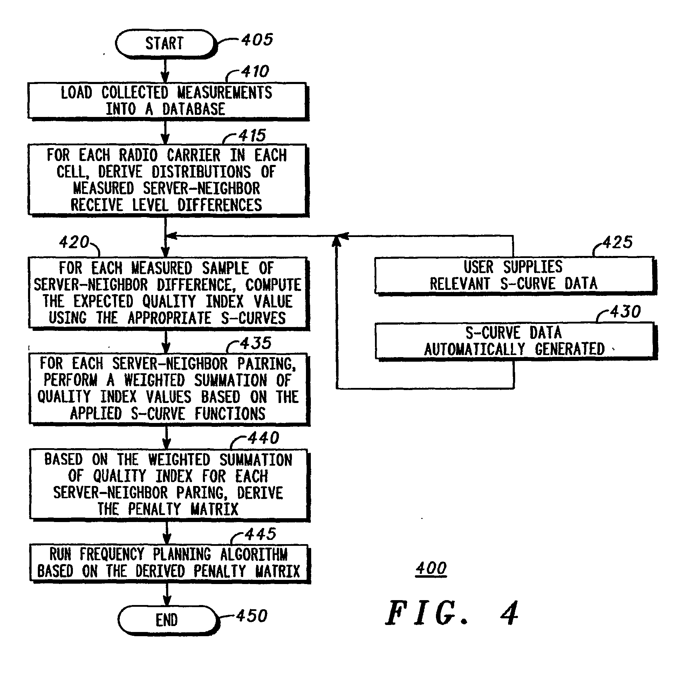

Referring now to FIG. 4, a flowchart 400 illustrates an overview of the preferred frequency planning process. The flowchart commences in step 405 with the IOS collecting a number of measurement reports (MRs). These MRs are preferably entered into a database located within, or operably coupled to, the IOS in step 410. For each radio carrier in each cell, the IOS derives a distribution of measured server cell-to-neighbour cell received signal strength indication (RSSI) differences, as shown in step 415.

For each measured sample of server-neighbour RSSI difference, the IOS 172 computes a (quality index) penalty value using the appropriate 'S' curves, and, having calculated a number of penalty values, generates one or more penalty matrix from the 'S' curves, as shown in step 420. For each server-neighbour pairing, particularly when the pairings contain dissimilar technologies, traffic types (and possibly contexts), the IOS 172 then preferably performs a weighted summation of the penalty values (effectively from the multiple 'S' curves), as shown in step 435.

Based on the weighted summation of (quality index) penalty values for each server-neighbour pairing, the IOS derives an overall aggregate penalty matrix as shown in step 440. Following the generation of the overall aggregate penalty matrix in step 440, the frequency planning tool is able to run a frequency planning algorithm based on such an improved derived penalty matrix that, for example, relates to two or more technologies and/or traffic types (and possibly contexts), as shown in step 445.

Thus, in this manner, an IOS 172 is able to determine rapidly an optimal set of frequencies to be allocated to cells in a multiple technology environment.

Although the preferred embodiment of the present invention has been described with reference to a relationship between carrier-to-interference and FER on a given cell for a particular technology and/or traffic type (and possibly context), it is within the contemplation of the invention that one or more interference metrics (such as C/I) could be used, in conjunction with one or more quality of services (such as bit error rate (BER), frame error rate, received signal strength indication (RSSI), etc., as would be appreciated by a skilled artisan.

It is also within the contemplation of the present invention that the inventive concepts are not limited to minimising interference between voice and data technologies. Indeed, it is envisaged that the inventive concepts can be applied to any wireless cellular communication system. Notably, the inventive concepts can be applied to any wireless communication system that employs multiple radio frequencies, and is therefore particularly suited to frequency planning in a GSM cellular system.

The preferred embodiment of the present invention has been described with regard to a cellular telephony communication system, such as the global system for mobile communications (GSM), supporting a number of traffic types. It is envisaged that the invention is equally applicable to other wireless communication systems, such as a universal mobile telecommunication system (UMTS), any code division multiple access (CDMA) or time division multiple access (TDMA) system, or an integrated digitally enhanced network (iDEN)™ as supplied by Motorola™. It is also within the contemplation of the invention that alternative radio communication architectures, such as private or public mobile radio communication systems could benefit from the inventive concepts described herein.

It is also envisaged that the inventive concepts herein described can be equally applied in commercial frequency planning tools such as Netplan™, Planet™, CellOpt™ and Odyssey™.

It will be understood that the communication system, communication unit (such as an IOS or adapted OMC), and improved method for frequency re-planning, as described above, provides at least one or more of the following advantages that could not be reliably obtained using existing frequency planning methods:

(i) Supports frequency planning for a radio system with multiple traffic types;

(ii) Facilitates frequency planning where there is a non-uniform allocation of penalty values on different radio carriers, for example within the same radio cell. This allows different re-use distances to be achieved for different radio carriers. In so doing, it is now possible to plan for a different quality of service on respective, individual radio carriers;

(iii) A multiple 'S' curve processing algorithm can be readily incorporated into a penalty generation system employing measurement reports (MRs). This means that the penalty values generated for individual radio carriers are representative of an actual subscriber's perceived interference; and

(iv) The inventive concepts allow for the automatic frequency planning of a radio system supporting multiple technologies such as AMR, GSM, GPRS, EDGE and traffic types, such as voice, data, video or contexts, such as a level of discontinuous transmission in a neighbouring cell, a Rayleigh fading profile for a cell, etc.

Thus, a wireless communication system, a communication unit, and a method for frequency re-planning have been provided wherein the aforementioned disadvantages associated with prior art arrangements have been substantially alleviated.

## Claims

1.  A wireless communication system (100) comprising a wireless infrastructure supporting communication for a plurality of mobile communication units (112-115), wherein the wireless infrastructure comprises a processor (175) configured to generate a frequency re-use plan, the wireless communication system (100) **characterised in that**:

    the processor (175) is arranged to generate a number of carrier-to-carrier penalty tables based on a relationship between an interference measurement being a measured server cell-to-neighbour cell received signal strength indicator difference and a quality of service value for each communication type in each cell served by the wireless infrastructure, wherein the processor (175) is further arranged to generate each relationship as one of a plurality of 'S' shaped curves characterizing each relationship as a penalty table, and wherein the processor (175) is further arranged to generate an overall interference penalty value for a cell from the tables, and wherein the frequency re-use plan is based in part on the overall interference penalty value.

2.  A wireless communication system (100) according to Claim 1, wherein the interference measurement comprises a carrier to interference level measurement.

3.  A wireless communication system (100) according to Claim 1, wherein the plurality of 'S' curves chart the effect of different Mobile Allocation List lengths on a Frame Error Rate measurement of the different communication types, for a given level of radio interference in order to represent the effects of discontinuous transmission and frequency hopping.

**4.** A wireless communication system (100) according to Claim 1, wherein the processor (175) is arranged to automatically generate the plurality of 'S' curves in a real-time manner based on a received measurement report generated by one or more base transceiver stations or one or more mobile communication units operational within a cell of the wireless communication system (100).

**5.** A wireless communication system (100) according to any preceding Claim, wherein the relationship between the interference measurement and the quality of service value for a plurality of communication types comprises a real-time traffic class.

**6.** A wireless communication system (100) according to any preceding Claim, wherein the quality of service value of a communication type comprises a frame erasure rate measurement.

**7.** A wireless communication system (100) according to any preceding Claim, wherein the wireless communication system (100) is arranged to support a number of different traffic types having different minimum carrier-to-interference requirements.

**8.** A method (400) of frequency re-use planning in a wireless communication system, wherein the wireless communication system (100) comprises a wireless infrastructure supporting communication for a plurality of mobile communication units (112-115), wherein the wireless infrastructure comprises a processor (175) for generating a frequency re-use plan, the method **characterised by** the steps of:

generating (420) a number of carrier-to-carrier penalty tables based on a relationship between an interference measurement being a measured server cell-to-neighbour cell received signal strength indicator difference and a quality of service value for each communication type in each cell served by the wireless infrastructure, wherein each relationship is generated as one of a plurality of 'S' shaped curves characterizing each relationship as a penalty table;
generating an overall interference penalty value for a cell from the tables; and
generating the frequency re-use plan based in part on the overall interference penalty value.

**9.** A method (400) of frequency re-use planning in a wireless communication system according to Claim 8, wherein each relationship is generated dependent upon a real-time traffic class.

**10.** A method (400) of frequency re-use planning in a wireless communication system according to Claim 8, wherein the method (400) further comprises the step of: combining (450) two or more carrier-to-carrier penalty tables to generate an aggregate penalty table.

**11.** Computer program product comprising instructions stored on a storage medium for implementation in a processor that, when the computer program is executed in the processor, is provided with computer program means for performing the steps of a method according to any one of Claims 8 to 10.

**12.** A communication unit (146, 172) operating in a wireless infrastructure of a wireless communication system that comprises multiple cells, wherein the wireless infrastructure is arranged to support communication for a plurality of mobile communication units (112-115) the communication unit **characterised by**:

a processor (175) configured to generate a frequency re-use plan and being arranged to generate a number of carrier-to-carrier penalty tables based on a relationship between an interference measurement being a measured server cell-to-neighbour cell received signal strength indicator difference and a quality of service value for each communication type in each cell served by the wireless infrastructure, wherein the processor is further arranged to generate each relationship as one of a plurality of 'S' shaped curves characterizing each relationship as a penalty table and the processor (175) is further arranged to generate an overall interference penalty value for a cell from the tables, and to facilitate a frequency planning operation of the wireless communication system with the frequency re-use plan being generated based in part on the overall interference penalty value.

**13.** A communication unit (146, 172) according to Claim 12, wherein the plurality of communication types comprise a real-time traffic class.

**Patentansprüche**

1. Drahtloskommunikationssystem (100) mit einer Drahtlosinfrastruktur, die die Kommunikation für mehrere mobile Kommunikationseinheiten (112 - 115) überstützt, wobei die Drahtlosinfrastruktur einen Prozessor (175) aufweist, der dazu eingerichtet ist, einen Frequenzwiederverwendungsplan zu erzeugen, wobei das Drahtloskommunikationssystem (100) **dadurch gekennzeichnet ist, dass**:

   der Prozessor (175) dazu eingerichtet ist, eine Anzahl von Träger-zu-Träger-Straftabellen zu erzeugen, auf der Grundlage einer Beziehung zwischen einer Interferenzmessung, die eine gemessene Serverzelle-zu-Nachbarzelle-Empfangssignalstärkeindikatordifferenz ist, und einem Dienstgütewert für jede Kommunikationsart in jeder von der Drahtlosinfrastruktur versorgten Zelle, wobei der Prozessor (175) weiter dazu eingerichtet ist, jede Beziehung als eine unter mehreren S-förmigen Kurven zu erzeugen, die jede Beziehung als eine Straftabelle kennzeichnen, und wobei der Prozessor (175) weiter dazu eingerichtet ist, aus den Tabellen einen Gesamtinterferenzstrafwert für eine Zelle zu erzeugen, und wobei der Frequenzwiederverwendungsplan zum Teil auf dem Gesamtinterferenzstrafwert beruht.

2. Drahtloskommunikationssystem (100) nach Anspruch 1, wobei die Interferenzmessung eine Träger-zu-Interferenz-Pegelmessung aufweist.

3. Drahtloskommunikationssystem (100) nach Anspruch 1, wobei die mehrern S-Kurven den Effekt verschiedener Mobile-Allocation-List-Längen auf eine Frame-Error-Rate-Messung der verschiedenen Kommunikationsarten für einen gegebenen Funkinterferenzpegel abbilden, um die Auswirkungen einer diskontinuierlichen Übertragung und von Frequenzsprüngen darzustellen.

4. Drahtloskommunikationssystem (100) nach Anspruch 1, wobei der Prozessor (175) dazu eingerichtet ist, automatisch die mehreren S-Kurven in einer Echtzeit-Weise auf der Grundlage eines empfangenen Messberichtes zu erzeugen, der von einer oder von mehreren Basistransceiverstationen oder von einer oder von mehreren innerhalb einer Zelle des Drahtloskommunikationssystems (100) funktionierenden mobilen Kommunikationseinheiten erzeugt wurde.

5. Drahtloskommunikationssystem (100) nach einem der vorangehenden Ansprüche, wobei die Beziehung zwischen der Interferenzmessung und des Dienstgütewertes für mehrere Kommunikationsarten eine Echtzeittraffic-Klasse aufweist.

6. Drahtloskommunikationssystem (100) nach einem der vorangehenden Ansprüche, wobei der Dienstgütewert einer Kommunikationsart eine Rahmenlöschratenmessung aufweist.

7. Drahtloskommunikationssystem (100) nach einem der vorangehenden Ansprüche, wobei das Drahtloskommunikationssystem (100) dazu eingerichtet ist, eine Anzahl verschiedener Traffic-Arten zu unterstützen, die verschiedene Mindest-Träger-zu-Interferenz-Anforderungen haben.

8. Verfahren (400) zur Frequenzwiederverwendungsplanung in einem Drahtloskommunikationssystem, wobei das Drahtloskommunikationssystem (100) eine Drahtlosinfrastruktur aufweist, die die Kommunikation für mehrere mobile Kommunikationseinheiten (112-115) unterstützt, wobei die Drahtlosinfrastruktur einen Prozessor (175) zum Erzeugen eines Frequenzwiederverwendungsplanes aufweist und wobei das Verfahren durch die folgenden Schritte gekennzeichnet ist:

   Erzeugen (420) einer Anzahl von Träger-zu-Träger-Straftabellen auf der Grundlage einer Beziehung zwischen einer Interferenzmessung, die eine gemessene Serverzelle-zu-Nachbarzelle-Empfangssignalstärkeindikatordifferenz ist, und einem Dienstgütewert für jede Kommunikationsart in jeder von der Drahtlosinfrastruktur versorgten Zelle, wobei jede Beziehung als eine Kurve unter mehreren S-förmigen Kurven erzeugt wird, die jede Beziehung als eine Straftabelle charakterisieren;
   Erzeugen eines Gesamtinterferenzstrafwertes für eine Zelle aus den Tabellen; und
   Erzeugen des Frequenzwiederverwendungsplanes zum Teil auf der Grundlage des Gesamtinterferenzstrafwertes.

9. Verfahren (400) zur Frequenzwiederverwendungsplanung in einem Drahtloskommunikationssystem nach Anspruch 8, wobei jede Beziehung in Abhängigkeit von einer Echtzeittraffic-Klasse erzeugt wird.

**10.** Verfahren (400) zur Frequenzwiederverwendungsplanung in einem Drahtloskommunikationssystem nach Anspruch 8, wobei das Verfahren (400) weiter den folgenden Schritt aufweist: Kombinieren (450) von zwei oder mehr Träger-zu-Träger-Straftabellen, um eine zusammengefasste Straftabelle zu erzeugen.

**11.** Computerprogrammerzeugnis mit auf einem Speichermedium gespeicherten Anweisungen zur Umsetzung in einem Prozessor, dem Computerprogrammmittel zum Ausführen der Schritte eines Verfahrens nach einem der Ansprüche 8 bis 10 zur Verfügung gestellt werden, wenn das Computerprogramm in dem Prozessor ausgeführt wird.

**12.** Kommunikationseinheit (146, 172), die in einer Drahtlosinfrastruktur eines mehrere Zellen umfassenden Drahtloskommunikationssystems arbeitet, wobei die Drahtlosinfrastruktur dazu eingerichtet ist, die Kommunikation für mehrere mobile Kommunikationseinheiten (112 - 115) zu unterstützen, wobei die Kommunikationseinheit **dadurch gekennzeichnet ist, dass**
ein Prozessor (175) dazu eingerichtet ist, einen Frequenzwiederverwendungsplan zu erzeugen und eine Anzahl von Träger-zu-Träger-Straftabellen zu erzeugen auf der Grundlage einer Beziehung zwischen einer Interferenzmessung, die eine gemessene Serverzelle-zu-Nachbarzelle-Empfangssignalstärkeindikatordifferenz ist, und einem Dienstgütewert für jede Kommunikationsart in jeder von der Drahtlosinfrastruktur versorgten Zelle, wobei der Prozessor weiter dazu eingerichtet ist, jede Beziehung als eine Kurve aus mehreren S-förmigen Kurven zu erzeugen, die jede Beziehung als eine Straftabelle kennzeichnen und wobei der Prozessor (175) weiter dazu eingerichtet ist, aus den Tabellen einen Gesamtinterferenzstrafwert für eine Zelle zu erzeugen und einen Frequenzplanungsvorgang des Drahtloskommunikationssystems zu erleichtern, wobei der Frequenzwiederverwendungsplan zum Teil auf der Grundlage des Gesamtinterferenzstrafwertes erzeugt wird.

**13.** Kommunikationseinheit (146, 172) nach Anspruch 12, wobei die mehreren Kommunikationsarten eine Echtzeittraffic-Klasse umfassen.

**Revendications**

**1.** Système de communication sans fil (100) comportant une infrastructure sans fil supportant la communication pour plusieurs unités de communication mobiles (112 - 115), l'infrastructure sans fil comportant un processeur (175) configuré pour générer un plan de réutilisation de fréquence, le système de communication sans fil (100) étant **caractérisé en ce que**
le processeur (175) est agencé pour générer un nombre de tableaux de pénalité porteuse-à-porteuse sur la base d'une relation entre une mesure d'interférence, qui est une différence d'indicateur de puissance de signal reçu cellule serveur cellule voisine mesurée, et une valeur de qualité de service pour chaque type de communication dans chaque cellule qui est servie par l'infrastructure sans fil, le processeur (175) étant agencé de plus pour générer chaque relation sous forme d'une courbe parmi plusieurs courbes en forme de 'S' qui caractérisent chaque relation sous forme d'un tableau de pénalité, le processeur (175) étant agencé de plus pour générer une valeur de pénalité interférence globale pour une cellule à partir des tableaux, le plan de réutilisation de fréquence étant basé en partie sur la valeur de pénalité interférence globale.

**2.** Système de communication sans fil (100) selon la revendication 1, la mesure d'interférence comportant une mesure du rapport niveau porteuse niveau interférence.

**3.** Système de communication sans fil (100) selon la revendication 1, les plusieurs courbes 'S' traçant l'effet des différentes langueurs Mobile Allocation List sur une mesure Frame Error Rate des différents types de communication, pour un niveau donné de radio interférence afin de représenter les effets de transmission discontinue et de sauts de fréquence.

**4.** Système de communication sans fil (100) selon la revendication 1, le processeur (175) étant agencé pour générer automatiquement les plusieurs courbes 'S' d'une manière temps réel sur la base d'un rapport de mesure reçu généré par une ou plusieurs stations de base émittrices-réceptrices ou par une ou plusieurs unités de communication mobiles qui sont opérationnelles dans une cellule du système de communication sans fil (100).

**5.** Système de communication sans fil (100) selon l'une des revendications précédentes, la relation entre la mesure d'interférence et la valeur de qualité de service pour plusieurs types de communication comprenant une classe de trafic temps réel.

**6.** Système de communication sans fil (100) selon l'une des revendications précédentes, la valeur de qualité de service d'un type de communication comprenant une mesure d'un taux d'effacement de trame.

**7.** Système de communication sans fil (100) selon l'une des revendications précédentes, le système de communication sans fil (100) étant agencé pour supporter un nombre de différents types de trafic qui ont des exigences différentes en vue du rapport minimum porteuse interférence.

**8.** Procédé (400) de planification de réutilisation de fréquence dans un système de communication sans fil, le système (100) de communication sans fil comprenant une infrastructure sans fil qui supporte la communication pour plusieurs unités de communication mobiles (112 - 115), l'infrastructure sans fil comportant un processeur (145) pour générer un plan de réutilisation de fréquence, le procédé étant **caractérisé par** les étapes suivantes:

génération (420) d'un nombre de tableaux de pénalité porteuse-à-porteuse sur la base d'une relation entre une mesure d'interférence, qui est une différence d'indicateur de puissance de signal reçu cellule serveur cellule voisine mesurée, et une valeur de qualité de service pour chaque type de communication dans chaque cellule servie par l'infrastructure sans fil, chaque relation étant générée sous forme d'une courbe parmi plusieurs courbes en forme de 'S' qui caractérisent chaque relation sous forme d'un tableau de pénalité;
génération d'une valeur de pénalité interférence globale pour une cellule à partir des tableaux; et
génération du plan de réutilisation de fréquence partiellement sur la base de la valeur de pénalité interférence globale.

**9.** Procédé (400) de planification de réutilisation de fréquence dans un système de communication sans fil selon la revendication 8, chaque relation étant générée en fonction d'une classe de trafic temps réel.

**10.** Procédé (400) de planification de réutilisation de fréquence dans un système de communication sans fil selon la revendication 8, le procédé (400) comprenant de plus l'étape suivante: combinaison (450) de deux ou plus de deux tableaux de pénalité porteuse à porteuse pour générer un tableau de pénalité unifié.

**11.** Produit de programme d'ordinateur comportant des instructions stockées sur un moyen de stockage qui peuvent être exécutées dans un processeur auquel des moyens de programme d'ordinateur pour effectuer les étapes d'un procédé selon l'une quelconque des revendications 8 à 10 sont mis à disposition lorsque le programme d'ordinateur est exécuté dans le processeur.

**12.** Unité de communication (146, 172) qui opère dans une infrastructure sans fil d'un système de communication sans fil qui comprend des cellules multiples, l'infrastructure sans fil étant agencée pour supporter la communication pour plusieurs unités de communication mobiles (112 - 115), l'unité de communication étant **caractérisée par**:

un processeur (175) configuré pour générer un plan de réutilisation de fréquence et agencé pour générer un nombre de tableaux de pénalité porteuse-à-porteuse sur la base d'une relation entre une mesure d'interférence, qui est une différence d'indicateur de puissance de signal reçu cellule serveur cellule voisine mesurée, et une valeur de qualité de service pour chaque type de communication dans chaque cellule servie par l'infrastructure sans fil, le processeur étant agencé de plus pour générer chaque relation sous forme d'une courbe parmi plusieurs courbes en forme de 'S' qui caractérisent chaque relation sous forme d'un tableau de pénalité, le processeur (175) étant agencé de plus pour générer une valeur de pénalité interférence globale pour une cellule à partir des tableaux, et pour faciliter une opération de planification de fréquence du système de communication sans fil, le plan de réutilisation de fréquence étant généré partiellement sur la base de la valeur de pénalité interférence globale.

**13.** Unité de communication (146, 172) selon la revendication 12, les plusieurs types de communication comprenant une classe de trafic temps réel.

*FIG. 1*

100

*FIG. 2*

*200*

FER plotted against C/I(dB)

310

|     | A   | B   | C   |
| --- | --- | --- | --- |
| A   |     | 15  | 12  |
| B   | 10  |     | 30  |
| C   | 7   | 25  |     |

312  314  316
318  320  322

330

|     | A   | B   | C   |
| --- | --- | --- | --- |
| A   |     | 5   | 14  |
| B   | 4   |     | 25  |
| C   | 14  | 12  |     |

332  334  336
338  340  342

350

|     | A   | B   | C   |
| --- | --- | --- | --- |
| A   |     | 20  | 26  |
| B   | 14  |     | 30  |
| C   | 21  | 37  |     |

*300*

*FIG. 3*

START —405

LOAD COLLECTED MEASUREMENTS INTO A DATABASE —410

FOR EACH RADIO CARRIER IN EACH CELL, DERIVE DISTRIBUTIONS OF MEASURED SERVER-NEIGHBOR RECEIVE LEVEL DIFFERENCES —415

420— FOR EACH MEASURED SAMPLE OF SERVER-NEIGHBOR DIFFERENCE, COMPUTE THE EXPECTED QUALITY INDEX VALUE USING THE APPROPRIATE S-CURVES

USER SUPPLIES RELEVANT S-CURVE DATA —425

S-CURVE DATA AUTOMATICALLY GENERATED · —430

FOR EACH SERVER-NEIGHBOR PAIRING, PERFORM A WEIGHTED SUMMATION OF QUALITY INDEX VALUES BASED ON THE APPLIED S-CURVE FUNCTIONS —435

BASED ON THE WEIGHTED SUMMATION OF QUALITY INDEX FOR EACH SERVER-NEIGHBOR PARING, DERIVE THE PENALTY MATRIX —440

RUN FREQUENCY PLANNING ALGORITHM BASED ON THE DERIVED PENALTY MATRIX —445

END —450

400

*FIG. 4*

**EP 1 652 400 B1**

**REFERENCES CITED IN THE DESCRIPTION**

**Patent documents cited in the description**

- GB 2382503 A
- GB 2356320 A